# EUROPEAN PATENT SPECIFICATION

(11) **EP 3 358 795 B1**
(45) Date of publication and mention of the grant of the patent: **04.11.2020**
(21) Application number: 15907638.9
(22) Date of filing: 06.11.2015
(51) Int. Cl.: G06F 9/50, G06F 9/455, H04L 12/911

(54) **METHOD AND APPARATUS FOR ALLOCATING A VIRTUAL RESOURCE IN NETWORK FUNCTIONS VIRTUALIZATION (NFV) NETWORK**
VERFAHREN UND VORRICHTUNG ZUR ZUWEISUNG EINER VIRTUELLEN RESSOURCE IN EINEM NETZWERK ZUR VIRTUALISIERUNG VON NETZWERKFUNKTIONEN
PROCÉDÉ ET APPAREIL D'ATTRIBUTION D' UNE RESSOURCE VIRTUELLE DANS UN RÉSEAU DE VIRTUALISATION DE FONCTIONS DE RÉSEAU (NFV)

(43) Date of publication of application: 08.08.2018
(73) Proprietor: Huawei Technologies Co., Ltd., Longgang District Shenzhen, Guangdong 518129 (CN)
(72) Inventor: XU, Ruiyue, Shenzhen, Guangdong 518129 (CN); JI, Li, Shenzhen, Guangdong 518129 (CN)
(74) Representative: Thun, Clemens
(86) International application number: PCT/CN2015/093947
(87) International publication number: WO 2017/075796

(56) References cited:
- EP-A1- 2 940 968
- EP-A1- 2 940 968
- WO-A1-2015/099036
- CN-A- 102 137 494
- CN-A- 104 050 045
- US-A1- 2013 073 732
- RONG LIU ET AL: "Uniform Modeling of Resources and Business Processes Using Business Entities", SERVICES COMPUTING (SCC), 2011 IEEE INTERNATIONAL CONFERENCE ON, IEEE, 4 July 2011 (2011-07-04), pages 693-700, XP031965077, DOI: 10.1109/SCC.2011.45 ISBN: 978-1-4577-0863-3

## Description

### TECHNICAL FIELD

The present invention relates to the communications field, and in particular, to a method and an apparatus for allocating a virtual resource in a network functions virtualization NFV network.

### BACKGROUND

With development of cloud technologies, a virtualization technology, as a basic technology of cloud computing, is widely used in an enterprise data center and a large-scale cluster computing field.

In a network functions virtualization (Network Functions Virtualization, "NFV" for short) technology, one computer is virtualized into a plurality of virtual logical computers, that is, virtual machines (Virtual Machine, "VM" for short). A virtual machine usually performs data communication with the outside of a server by using a virtual network interface card, a virtual switch, and a server physical network port connected to a chassis switch or a top-of-rack switch.

In the NFV technology, many types of network devices may be merged into an industry standard by using a virtualization technology of the information technology (Information Technology, IT for short). For example, serving, switching, storage, and the like may be deployed in a data center or a network node. Various network functions can be implemented in a form of software, can run on a server of the industry standard, and can be further migrated, instantiated, redeployed, and the like according to requirements. In addition, a virtualized network function (Virtualized Network Function, "VNF" for short) is generated without installing a new device. A network service (Network Service, "NS" for short) may be implemented between a plurality of virtualized network functions.

In an NFV network architecture, a network functions virtualization orchestrator (NFV Orchestrator, "NFVO" for short) unit, a virtualized network function manager (VNF Manager, "VNFM" for short) unit, or a virtualized infrastructure manager (Virtualized Infrastructure Manager, "VIM" for short) all may simultaneously receive different resource requests. The resource request herein may be a resource request sent by a resource tenant such as a virtual operator that leases an operator resource, or may be sent by a function unit such as a VNFM unit or an NFVO unit that has a resource allocation capability, or may be sent by a function unit such as an NS unit or a VNF unit that needs to apply for a resource. A network element may correspond to one or more of the foregoing types of function units, and different network elements correspond to different types of function units.

For example, WO 2015/099036A1 refers to a virtual server for executing a communication process implemented on virtualization resources without being inefficient even when different virtualization resource management schemes are included. There is provided a management system included in a mobile communication system configured to include an NFVI, which is virtualization resources including a physical server in which a VNF to execute a communication process is generated and includes a VNFM for managing the VNF, a VIM for managing the virtualization resources of the NFVI, and an orchestrator for managing all the virtualization resources of the NFVI, wherein the orchestrator includes a virtual server generation request section configured to input detailed information for implementing the VNF retained by the VNFM, rewrite the input detailed information according to a virtualization resource management scheme by the VIM, and request the VIM to generate the VNF.

Further, prior art document "Uniform Modeling of Resources and Business Processes Using Business Entities", 4 July 2011, refers to model resources as full-fledged business entities to capture rich behavior of resources that affect a business process execution.

However, in an existing resource NFV network architecture, resource requests sent by different function units are equally treated. As a result, resource utilization efficiency is low.

### SUMMARY

The present invention provides a method and an apparatus and a computer program product for allocating a virtual resource in a network functions virtualization NFV network, to improve resource utilization efficiency. This problem is solved by the subject matter of the independent claims.

Based on the foregoing technical solutions, according to the method and apparatus for allocating a virtual resource in a network functions virtualization NFV network in the embodiments of the present invention, the VIM determines priority information of each virtual resource request message according to the identification information carried in each of the plurality of received virtual resource request messages and a preset rule, and sequentially allocates resources for the virtual resource request messages according to the priorities. Therefore, when resource requests are processed concurrently, resource utilization efficiency and flexibility can be improved. In addition, priorities of different resource request messages are considered, so that a resource contention phenomenon can be avoided, system stability and reliability can be improved, and faster and more efficient responses can be made to some emergencies.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic diagram of an NFV network architecture according to an example of the present invention;
FIG. 2 is a schematic flowchart of a method for allocating a virtual resource in an NFV network according to an example of the present invention;
FIG. 3 is another schematic flowchart of a method for allocating a virtual resource in an NFV network according to an example of the present invention;
FIG. 4 is a schematic block diagram of a VIM for allocating a virtual resource in an NFV network according to an example of the present invention;
FIG. 5 is a schematic block diagram of a virtual resource request unit for allocating a virtual resource in an NFV network according to an example of the present invention;
FIG. 6 is a schematic block diagram of a VIM for allocating a virtual resource in an NFV network according to another example of the present invention; and
FIG. 7 is a schematic block diagram of a virtual resource request unit for allocating a virtual resource in an NFV network according to another example of the present invention.

### DESCRIPTION OF EMBODIMENTS

The following clearly describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

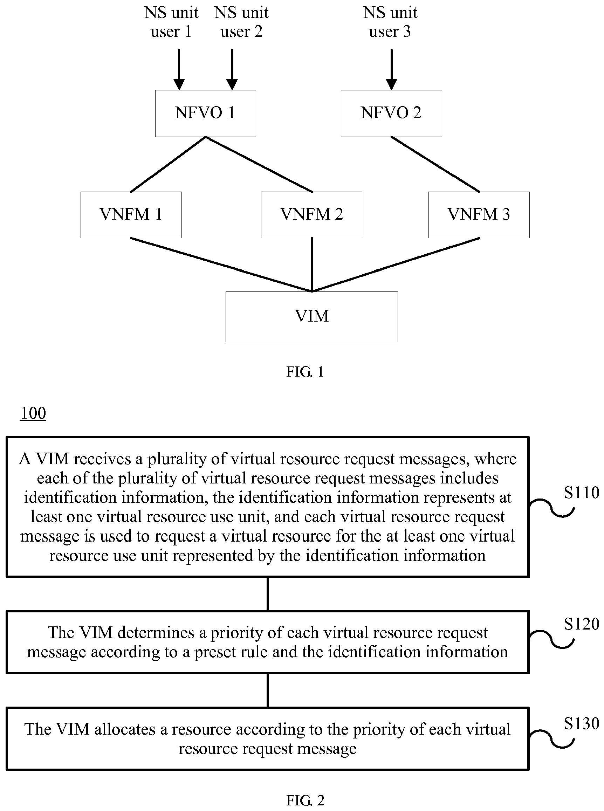

In the embodiments of the present invention, as shown in FIG. 1, for an NFV network, there may be one or more VIMs, or a plurality of VIMs are cascaded and all are managed by a controller VIM. That is, all NFVOs/VNFMs can be connected to the controller VIM. In addition, one NFV network may have one or more NFVOs, each NFVO may be connected to one or more VNFMs, one VNFM manages one or more VNFs, and one NFVO manages one or more NS units. One NS unit may include one or more VNFs, and each NS may correspond to one or more NS unit users. The NS unit user herein is a resource tenant such as a virtual operator that leases an operator resource. In the embodiments of the present invention, a virtual resource request unit may send or forward a virtual resource request message, and the virtual resource request message is used to request a VIM to allocate a virtual resource. The virtual resource request unit is a function unit such as a VNFM unit or an NFVO unit that has a virtual resource allocation capability. A virtual resource requested by the virtual resource request information is directly or indirectly used by a virtual resource use unit, and the virtual resource use unit is a function unit such as an NS unit or a VNF unit that needs to apply for a virtual resource. Optionally, the virtual resource use unit may alternatively be a VNFM unit or an NFVO unit, that is, the VNFM unit and the NFVO unit are considered as units that use a virtual resource. However, the present invention is not limited thereto.

In the embodiments of the present invention, for example, when requesting a virtual resource, an NS unit user may request to establish an NS unit or extend an existing NS unit; or a virtual resource request unit such as an NFVO unit requests a virtual resource, to request to establish an NS unit or extend an existing NS unit. A virtual resource may be requested from a VIM by using the NFVO unit, or a virtual resource may be requested from a VIM by using the virtual resource request unit, the NFVO unit, and a VNFM unit. For another example, a VNFM unit may also request a virtual resource from a VIM, for example, to request to establish a VNF unit or extend an existing VNF unit. That is, the VNFM unit may directly send a virtual resource request information message to the VIM, to request to establish a VNF unit or extend an existing VNF unit. The VIM allocates a virtual resource according to the received virtual resource request information, and sends the allocated virtual resource to a virtual resource request unit. For example, the VIM sends the virtual resource to the VNFM unit. The VNFM may allocate the virtual resource to a VNF unit, and the VNFM unit may further allocate the VNF unit including the virtual resource to an NFVO unit, so as to establish an NS unit or extend an existing NS unit. The present invention is not limited thereto.

These virtual resource request units and virtual resource use units have different importance. Therefore, for example, in some emergencies (for example, natural disasters), virtual resource requests of a related virtual resource request unit and virtual resource use unit need to be processed preferentially, and even may preempt available resources of another virtual resource request unit and virtual resource use unit. Therefore, the embodiments of the present invention provide a method for allocating a virtual resource in the NFV network.

FIG. 2 is a schematic flowchart of a method 100 for allocating a resource in an NFV network according to an embodiment of the present invention. The method 100 may be performed by a virtualized infrastructure manager VIM. As shown in FIG. 2, the method 100 includes the following steps:
S110. The virtualized infrastructure manager VIM receives a plurality of virtual resource request messages, where each of the plurality of virtual resource request messages includes identification information, the identification information represents at least one virtual resource use unit, and each virtual resource request message is used to request a virtual resource for the at least one virtual resource use unit represented by the identification information.
S120. The VIM determines a priority of each virtual resource request message according to a preset rule and the identification information.
S130. The VIM allocates a resource according to the priority of each virtual resource request message.

Specifically, the VIM may receive the plurality of virtual resource request messages, and each of the plurality of virtual resource request messages is used to request to allocate a virtual resource. The virtual resource request message may include the identification information, and the identification information may represent the at least one virtual resource use unit. The at least one virtual resource use unit is configured to directly or indirectly use the virtual resource requested by the virtual resource request message. For example, the virtual resource use unit may be an NS unit user, an NS unit, a VNF unit, an NFVO unit, or a VNFM unit. The VIM may determine the priority of each virtual resource request message according to the identification information included in the plurality of received virtual resource request messages. Specifically, the VIM may determine priority information of the virtual resource request message according to the at least one virtual resource use unit represented by the identification information in the virtual resource request message and the preset rule that is sent by a management entity to the VIM. The VIM may separately allocate virtual resources for the plurality of virtual resource request messages in a sequence of priorities according to the priority information of each virtual resource request message.

Therefore, according to the method for allocating a virtual resource in an NFV network in this embodiment of the present invention, the VIM determines the priority information of each virtual resource request message according to the identification information carried in each of the plurality of received virtual resource request messages and the preset rule, and sequentially allocates resources for the virtual resource request messages according to the priorities. Therefore, when resource requests are processed concurrently, resource utilization efficiency and flexibility can be improved. In addition, priorities of different resource request messages are considered, so that a resource contention phenomenon can be avoided, system stability and reliability can be improved, and faster and more efficient responses can be made to some emergencies.

In S110, the VIM receives the plurality of virtual resource request messages, each of the plurality of virtual resource request messages includes the identification information, the identification information represents the at least one virtual resource use unit, and each virtual resource request message is used to request a virtual resource for the at least one virtual resource use unit represented by the identification information. That is, the at least one virtual resource use unit may be configured to directly or indirectly use the virtual resource requested by each virtual resource request message. Specifically, the VIM may receive a virtual resource request message sent by a virtual resource request unit. The virtual resource request unit may be a VNFM unit or an NFVO unit, and the VNFM unit or the NFVO unit may be directly connected to the VIM. The virtual resource request message is used to request a virtual resource, the at least one virtual resource use unit may directly or indirectly use the requested virtual resource, and the virtual resource request message is sent or forwarded by using at least one virtual resource request unit. Optionally, the at least one virtual resource use unit may be at least one of an NS unit, an NS unit user, or a VNF unit, or may be a VNFM unit or an NFVO unit.

Optionally, in an embodiment, for example, the VIM may receive a virtual resource request message sent by an NFVO unit. The virtual resource request message is sent by an NS unit user to the NFVO unit, and is used to request to establish a new NS unit. The NS unit may include a plurality of VNF units. The NFVO unit forwards the virtual resource request message to the VIM, so that the VIM allocates a resource according to the virtual resource request message, to form a VNF unit, and further form an NS unit. In this case, the NFVO unit is a virtual resource request unit, or may be a virtual resource use unit, and the NS unit user, the NS unit, and the VNF unit all are virtual resource use units. The virtual resource request message received by the VIM may include identification information, and the identification information may represent at least one of the foregoing virtual resource use units. For example, the at least one of the foregoing virtual resource use units may include all of the foregoing virtual resource use units, that is, the identification information may represent the NFVO unit, the NS unit user, the NS unit, and the VNF unit. Alternatively, the at least one of the foregoing virtual resource use units may include only some of the foregoing virtual resource use units, that is, the identification information may represent only the NS unit and the VNF unit. The present invention is not limited thereto. Optionally, the NFVO unit herein may further forward the virtual resource request message to the VIM by using a VNFM unit, and the VNFM unit may also be a virtual resource use unit. The present invention is not limited thereto.

Optionally, in an embodiment, for another example, the VIM may further receive a first virtual resource request message sent by any VNFM such as a first VNFM. The first virtual resource request message may be sent by the VNFM unit to the VIM, and is used to request to establish a new VNF unit for a first NS unit. The VIM may allocate a virtual resource to the first VNFM according to the virtual resource request message, so that the first VNFM unit establishes a new VNF unit by using the virtual resource. In this case, the virtual resource request unit herein is the first VNFM unit, and the virtual resource use unit includes the first NS unit and the VNF unit, and may also include the first VNFM unit. The first virtual resource request message received by the VIM may include identification information, and the identification information represents at least one of the foregoing virtual resource use units. For example, the at least one of the foregoing virtual resource use units may include all of the foregoing virtual resource use units, that is, the identification information may represent the first VNFM unit, the first NS unit, and the VNF unit. Alternatively, the at least one of the foregoing virtual resource use units may include only some of the foregoing virtual resource use units, for example, the identification information may represent only the first NS unit and the VNF unit. The present invention is not limited thereto.

Optionally, in an embodiment, for another example, the VIM may further receive another virtual resource request message sent by the first VNFM unit, that is, a second virtual resource request message. The second virtual resource request message may be sent by the first VNFM unit to the VIM, and is used to request to establish a new VNF unit for a second NS unit. The VIM may allocate a virtual resource to the first VNFM according to the second virtual resource request message, so that the first VNFM unit establishes a new VNF unit by using the virtual resource. In this case, the virtual resource request unit herein is the VNFM unit, and the virtual resource use unit includes the second NS unit and the VNF unit, and may also include the first VNFM unit. However, because resources are requested for different NS units, that is, resources are requested separately for the first NS unit and the second NS unit, the second resource request message is different from the first resource request message that also passes through the first VNFM.

In this embodiment of the present invention, each of the plurality of resource request messages received by the VIM includes the identification information, and the identification information may represent the at least one virtual resource use unit. Optionally, the identification information may be one identifier ID, and a plurality of virtual resource use units may be represented by using the ID. Alternatively, the identification information may be a plurality of identifiers IDs, and each ID corresponds to one virtual resource use unit. The present invention is not limited thereto.

In S120, the VIM determines the priority of each resource request message according to the preset rule and the identification information that is in each virtual resource request message. Specifically, each resource request message may include the identification information, and the identification information represents the at least one virtual resource use unit. Then, the VIM may determine the priority of each resource request message according to the identification information and the preset rule that is sent by the management entity. The preset rule may be sequentially determining a priority of each virtual resource use unit according to the priority of each of the at least one virtual resource use unit, and determining the priority of the virtual resource request message according to the priority of the one or more units; or may be determining the priority of the resource request message according to a correspondence between an overall permutation and combination form of the at least one virtual resource use unit and a priority.

In this embodiment of the present invention, the VIM may determine the priority information of each virtual resource request message according to the identification information in each virtual resource request message and the preset rule. Optionally, the VIM may receive the preset rule sent by the management entity. The management entity may be an operations support system (operations support system, "OSS" for short), an element management system (Element Manager System, "EMS" for short), an NFVO unit, and the like. The present invention is not limited thereto.

In this embodiment of the present invention, the preset rule sent by the management entity to the VIM may include a priority type. For example, the priority type may include a general priority (General priority) and a VIP priority (VIP priority). The general priority may be a basic attribute of each virtual resource request message and correspond to a sequence for allocating a resource for the virtual resource request message, and no resource preemption exists. That is, the general priority can indicate only an allocation sequence. In addition that the VIP priority can indicate a resource allocation sequence and a resource is preferentially allocated for a resource request corresponding to the VIP priority, the VIP priority can interrupt resource allocation that is being performed by the VIM for other virtual resource request information, and the resource request corresponding to the VIP priority is preferentially responded to. The resource request corresponding to the VIP priority may further have a privilege of preempting a resource, and preempt a virtual resource that has been reserved for or allocated to another virtual resource request unit, or preempt a virtual resource that has been allocated to a virtual resource use unit but has not been used. The VIP priority is an optional attribute. The management entity may configure the VIP priority for a special virtual resource request message, and send a configuration result to the VIM as the preset rule.

In this embodiment of the present invention, the preset rule sent by the management entity to the VIM may include determining the priority information of the virtual resource request message according to the priority of each of the at least one virtual resource use unit represented by the identification information. Specifically, the VIM receives at least one virtual resource request message, each virtual resource request message includes identification information, and the identification information represents at least one virtual resource use unit. The VIM may determine a priority of the virtual resource request message sequentially according to a priority of the one or more units represented by the identification information.

Optionally, in an embodiment, for example, identification information included in a virtual resource request message received by the VIM represents an NS unit user, an NS unit, and a VNF unit. One of the units may be selected according to the preset rule to start comparison. For example, priorities of NS unit users may be first compared, and a priority of the virtual resource request message is determined according to the priorities of the NS unit users. For example, a unit represented by identification information in a first virtual resource request message received by the VIM includes a first NS unit user, a unit represented by identification information in a second resource request message includes a second NS unit user, and a priority of the first NS unit user is higher than a priority of the second NS unit user according to the preset rule. Then, the VIM may determine that a priority of the first virtual resource request message is higher than a priority of the second virtual resource request message.

Optionally, when at least two of the plurality of resource request messages received by the VIM include identifiers of a same NS unit user, priorities of NS units may be further compared according to the preset rule, and priorities of the at least two virtual resource request messages are determined according to the priorities of the NS. For example, a unit represented by identification information in a first virtual resource request message received by the VIM includes a first NS unit user and a first NS unit, and a unit represented by identification information in a second virtual resource request message includes the first NS unit user and a second NS unit, and a priority of the first NS unit is higher than a priority of the second NS unit. Then, the VIM may determine that a priority of the first virtual resource request message is higher than a priority of the second virtual resource request message.

Optionally, when at least two resource request messages in the received virtual resource request messages further include identification information of a same NS unit, priorities of VNF units are further compared, and priorities of the at least two virtual resource request messages including identification information of the same NS unit are determined according to the priorities of the VNF units. For example, a unit represented by identification information in a first virtual resource request message received by the VIM includes a first NS unit user, a first NS unit, and a first VNF unit, a unit represented by identification information in a second virtual resource request message includes the first NS unit user, the first NS unit, and a second VNF unit, and a priority of the first VNF unit is higher than a priority of the second VNF unit according to the preset rule. Then, the VIM may determine that a priority of the first virtual resource request message is higher than a priority of the second virtual resource request message.

Optionally, a priority comparison sequence may be determined according to the preset rule. For example, a specific unit that is first selected for priority comparison from an NS unit user, an NS unit, and a VNF unit represented by identification information in a resource request message received by the VIM may be stipulated in the preset rule. However, the present invention is not limited thereto.

Optionally, in this embodiment of the present invention, the preset rule may further include a priority of identification information. That is, the priority of the virtual resource request message is determined according to priorities of permutations and combinations of the units represented by the identification information. Specifically, for example, an NFV architecture separately includes an NS unit user 1, an NS unit user 2, an NS unit 1, an NS unit 2, a VNFM unit 1, a VNFM unit 2, and an NFVO unit 1. When the VIM receives different virtual resource request messages, each virtual resource request message includes identification information, and it is assumed that each piece of identification information may represent an NS unit user, an NS unit, and a VNFM unit. In the preset rule, priorities of various combination forms of the NS unit users, the NS units, and the VNFM units may be stipulated. For example, a combination form of units represented by identification information included in a virtual resource request message 1 is {NFV Service User 1, NS 2, VNFM 1}, and a combination form of units represented by identification information included in a resource request message 2 is {NFV Service User 1, NS 2, VNFM 2}. Similarly, there are eight virtual resource request messages corresponding to eight combinations, and the preset rule may indicate a priority sequence of the eight combinations. When the VIM receives at least two virtual resource request messages, a combination form of units represented by identification information included in the virtual resource request message is one of the eight combinations. Then, the VIM may determine a priority of each resource request message according to the preset rule, process the at least two virtual resource request messages according to the priority sequence stipulated in the preset rule, and allocate resources for the at least two virtual resource request messages. For example, if a priority of the combination form {NFV Service User 1, NS 2, VNFM 1} is higher than a priority of the combination form {NFV Service User 1, NS 2, VNFM 2} according to the preset rule, a priority of a resource request message including the identification information of the combination form {NFV Service User 1, NS 2, VNFM 1} is higher than a priority of a resource request message including the identification information of the combination form {NFV Service User 1, NS 2, VNFM 2}.

Optionally, in an embodiment, the preset rule sent by the management entity may further include the following: A priority of a virtual resource request message having particular identification information is a VIP priority, that is, the virtual resource request message is preferentially processed, and can preempt a resource of another resource request message. For example, the preset rule may stipulate that when a combination form of units represented by identification information included in a virtual resource request message is {NFV Service User 1, NS 2, VNFM 2}, the virtual resource request message has a VIP priority. After receiving the virtual resource request message including the identification information, the VIM can determine that the virtual resource request message has a VIP priority. The VIM may preferentially process the virtual resource request message. The VIM may first suspend resource allocation that is being performed, and preferentially process the resource request message having the VIP priority; or may allocate, to the virtual resource request message having the VIP priority, a virtual resource that has been allocated to or reserved for another resource request message but has not been used. The present invention is not limited thereto.

In S130, the VIM allocates a resource according to priority information of each virtual resource request message, and allocates a resource corresponding to each virtual resource request message. Specifically, for example, when the VIM receives two virtual resource request messages that may be respectively referred to as a third virtual resource request message and a fourth virtual resource request message, if the VIM determines that a priority of the third virtual resource request message is higher than a priority of the fourth virtual resource request message, the VIM preferentially allocates a resource corresponding to the third virtual resource request message.

In this embodiment of the present invention, if priority information of each of at least two virtual resource request messages obtained by the VIM includes only a general priority, a resource is allocated to each virtual resource request message according to a priority sequence. For example, if priority information of each of the third virtual resource request message and the fourth virtual resource request message that are obtained by the VIM is the general priority, and the priority of the third virtual resource request message is higher than the priority of the fourth virtual resource request message, the VIM first allocates a corresponding resource for the third virtual resource request message, and then allocates a resource for the fourth virtual resource request message.

In this embodiment of the present invention, if at least one piece of the priority information of the at least two virtual resource request messages obtained by the VIM includes a VIP priority, the VIM preferentially allocates a resource for the virtual resource request message having the VIP priority, and a resource of another unit may be preempted. Specifically, if the priority of the third virtual resource request message received by the VIM is higher than that of the received fourth virtual resource request message, the priority information of the third virtual resource request message indicates that the third virtual resource request message has the VIP priority, and the fourth virtual resource request message has the general priority, the VIM preferentially processes the third virtual resource request message, and then processes the fourth virtual resource request message.

Optionally, in an embodiment, if the VIM first receives the fourth virtual resource request message and starts to allocate a resource for the fourth virtual resource request message, and receives the third virtual resource request message at this time, the VIM may suspend allocation of a resource for the fourth virtual resource request message, and instead, first allocate a resource for the third virtual resource request message, and then allocate a resource for the fourth virtual resource request message.

Optionally, in an embodiment, if the VIM first receives the fourth virtual resource request message and has allocated a resource for the fourth virtual resource request message, and receives the third virtual resource request message at this time, a resource may be preempted, and the VIM may allocate, for the third virtual resource request message, a virtual resource that has been allocated to or reserved for the fourth virtual resource request message but has not been used.

In this embodiment of the present invention, optionally, the VIM may further send indication information, and the indication information is used to indicate a result of allocating, by the VIM, a resource for a virtual resource request message. Specifically, after the VIM allocates a resource according to a priority of a virtual resource request message, the VIM may send indication information to a virtual resource request unit corresponding to the virtual resource request message, and the indication information indicates an allocation result of the VIM. Alternatively, when the virtual resource request message preempts a resource of another request message, or a resource requested by the virtual resource request message is preempted by another request message, the VIM sends indication information to a virtual resource request unit corresponding to the virtual resource request message, and the indication information may indicate information about resource preemption, for example, a unit preempting a resource, a unit whose resource is preempted, and other related information. For example, if a resource allocated by the VIM for the third virtual resource request message is a resource requested by the fourth virtual resource request information, the VIM may send indication information to a virtual resource request unit through which the fourth virtual resource request message passes, and the indication information is used to indicate that the resource requested by the fourth virtual resource request message is preempted by the third virtual resource request message. Optionally, the indication information may further include other information about resource preemption. The present invention is not limited thereto.

Therefore, according to the method for allocating a virtual resource in an NFV network in this embodiment of the present invention, the VIM determines the priority information of each virtual resource request message according to the identification information carried in each of the plurality of received virtual resource request messages and the preset rule, and sequentially allocates resources for the virtual resource request messages according to the priorities. Therefore, when resource requests are processed concurrently, resource utilization efficiency and flexibility can be improved. In addition, priorities of different resource request messages are considered, so that a resource contention phenomenon can be avoided, system stability and reliability can be improved, and faster and more efficient responses can be made to some emergencies.

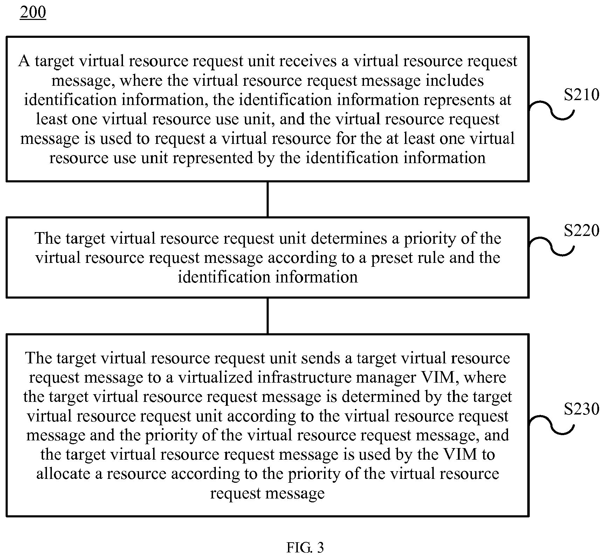

FIG. 3 is a schematic flowchart of a method 200 for allocating a virtual resource in an NFV network according to an embodiment of the present invention. The method 200 may be performed by a virtual resource request unit. The virtual resource request unit may be an NFVO unit or a VNFM unit, and the NFVO unit or the VNFM unit may be directly connected to a VIM. As shown in FIG. 3, the method 200 includes the following steps:
S210. A target virtual resource request unit receives a virtual resource request message, where the virtual resource request message includes identification information, the identification information represents at least one virtual resource use unit, and the virtual resource request message is used to request a virtual resource for the at least one virtual resource use unit represented by the identification information.
S220. The target virtual resource request unit determines a priority of the virtual resource request message according to a preset rule and the identification information.
S230. The target virtual resource request unit sends a target virtual resource request message to a virtualized infrastructure manager VIM, where the target virtual resource request message is determined by the target virtual resource request unit according to the virtual resource request message and the priority of the virtual resource request message, and the target virtual resource request message is used by the VIM to allocate a resource according to the priority of the virtual resource request message.

Therefore, according to the method for allocating a virtual resource in an NFV network in this embodiment of the present invention, the target virtual resource request unit determines priority information of each virtual resource request message according to the identification information carried in each of a plurality of received virtual resource request messages and the preset rule, and sends a resource request message including the priority information to the VIM, so that the VIM allocates resources according to the priorities of the virtual resource request messages. Therefore, when resource requests are processed concurrently, resource utilization efficiency and flexibility can be improved. In addition, priorities of different resource request messages are considered, so that a resource contention phenomenon can be avoided, system stability and reliability can be improved, and faster and more efficient responses can be made to some emergencies.

In S210, the target virtual resource request unit receives the virtual resource request message, the virtual resource request message includes the identification information, the identification information represents the at least one virtual resource use unit, and the virtual resource request message is used to request a virtual resource for the at least one virtual resource use unit represented by the identification information. That is, the at least one virtual resource use unit may be configured to directly or indirectly use the virtual resource requested by the virtual resource request message. The target virtual resource request unit may receive one or more virtual resource request messages. The target virtual resource request unit may be a VNFM unit or an NFVO unit, and the VNFM unit and the NFVO unit both may be directly connected to the VIM. Each virtual resource request message may be sent or forwarded by using a plurality of virtual resource request units. For example, the virtual resource request message may be forwarded by the NFVO unit to the VNFM unit, and then is forwarded by the VNFM unit to the VIM.

In this embodiment of the present invention, a virtual resource request message received by the target virtual resource request unit includes identification information, and the identification information may represent at least one virtual resource use unit. The target virtual resource request unit is configured to send or forward the virtual resource request message, and the at least one virtual resource use unit is configured to directly or indirectly use a resource requested by the virtual resource request message.

Optionally, in an embodiment, for example, the target virtual resource request unit may be an NFVO unit, and the NFVO unit receives a virtual resource request message. The resource request message is sent by an NS unit user to the NFVO unit, and is used to request to establish a new NS unit. The NS unit may include a plurality of VNF units. The NFVO unit may forward the virtual resource request message to the VIM, so that the VIM allocates a resource according to the virtual resource request message, to form a VNF unit, and further form an NS unit. In this case, the NFVO unit is the target virtual resource request unit, the NS unit user, the NS unit, and the VNF unit all are virtual resource use units, and the NFVO unit may also be considered as a virtual resource use unit. The virtual resource request message received by the target virtual resource request unit, that is, the NFVO unit, may include identification information, and the identification information represents at least one of the foregoing virtual resource use units. For example, the at least one of the foregoing virtual resource use units may include all of the foregoing virtual resource use units, that is, the identification information may represent the NFVO unit, the NS unit user, the NS unit, and the VNF unit. Alternatively, the at least one of the foregoing virtual resource use units may include only some of the foregoing virtual resource use units, that is, the identification information may represent only the NS unit and the VNF unit. The present invention is not limited thereto. Optionally, the NFVO unit herein may alternatively forward the virtual resource request message to the VIM by using the VNFM unit. In this case, the VNFM is a target virtual resource request unit receiving the virtual resource request message. The VNFM unit is also a virtual resource use unit, that is, the VNFM unit may also be represented by using identification information. The present invention is not limited thereto.

Optionally, in an embodiment, for another example, the target virtual resource request unit may alternatively be a first VNFM unit. The first VNFM unit receives a first virtual resource request message, and the first resource request message may be generated by the VNFM unit and sent to the VIM, and is used to request to establish a new VNF unit for a first NS unit. The VIM may allocate a virtual resource to the first VNFM according to the virtual resource request message, so that the first VNFM unit establishes a new VNF unit by using the virtual resource. In this case, the target virtual resource request unit herein is the first VNFM unit, and the virtual resource use unit includes the first NS unit and the VNF unit, and may also include the first VNFM unit. The first virtual resource request message received by the first VNFM unit may include identification information, and the identification information represents at least one of at least one virtual resource use unit of the first VNFM unit. For example, the at least one of the at least one virtual resource use unit of the first VNFM unit may include all of the foregoing virtual resource use units, that is, the identification information may represent the first VNFM unit, the first NS unit, and the VNF unit. Alternatively, the at least one of the at least one virtual resource use unit of the first VNFM unit may include only some of the foregoing virtual resource use units, for example, the identification information may represent only the first NS unit and the VNF unit. The present invention is not limited thereto.

Optionally, in an embodiment, for another example, the target virtual resource request unit is still the first VNFM unit. The first VNFM unit receives a second virtual resource request message, and the second virtual resource request message may be sent by the first VNFM unit to the VIM, and is used to request to establish a new VNF unit for a second NS unit. The VIM may allocate a virtual resource to the first VNFM according to the second virtual resource request message, so that the first VNFM unit establishes a new VNF unit by using the virtual resource. In this case, the target virtual resource request unit herein is the VNFM unit, and the virtual resource use unit is the second NS unit and the VNF unit, and may also include the first VNFM unit. However, because resources are requested for different NS units, that is, resources are requested separately for the first NS unit and the second NS unit, the second virtual resource request message is different from the first virtual resource request message.

In this embodiment of the present invention, each resource request message received by the target virtual resource request unit includes identification information, and the identification information may represent at least one virtual resource use unit. Optionally, the identification information may be one identifier ID, and a plurality of virtual resource use units may be represented by using the ID. Alternatively, the identification information may be a plurality of identifiers IDs, and each ID corresponds to one virtual resource use unit. The present invention is not limited thereto.

In S220, the target virtual resource request unit determines priority of each received virtual resource request message according to the preset rule and identification information that is in each resource request message. Specifically, each resource request message may include the identification information, and the identification information represents at least one virtual resource use unit. Then, the target virtual resource request unit may determine the priority of each resource request message according to the identification information and the preset rule that is sent by a management entity. The preset rule may be sequentially determining a priority of each virtual resource use unit according to a priority of each of the at least one virtual resource use unit represented by the identification information, and determining the priority of the virtual resource request message according to the priority of the one or more units; or may be determining the priority of the resource request message according to a correspondence between a permutation and combination form of the at least one virtual resource use unit and a priority.

Optionally, the target virtual resource request unit may receive the preset rule sent by the management entity, and the management entity may be an OSS, an EMS, an NFVO unit, and the like. The present invention is not limited thereto.

In this embodiment of the present invention, the preset rule sent by the management entity to the target virtual resource request unit may include a priority type. For example, the priority type may include a general priority (General priority) and a VIP priority (VIP priority). The general priority may be a basic attribute of each virtual resource request message, and correspond to a sequence for allocating a resource for the virtual resource request message. That is, the target virtual resource request unit determines the priority, and after sending the priority to the VIM, the VIM may allocate a resource according to a sequence of the general priority, and no resource preemption exists. That is, the general priority can indicate only an allocation sequence. In addition that the VIP priority can indicate a sequence of allocating, by the VIM, a resource for a resource request message and a resource is preferentially allocated for a resource request corresponding to the VIP priority, the VIP priority can interrupt resource allocation that is being performed by the VIM for other virtual resource request information, and the resource request corresponding to the VIP priority is preferentially responded to. The resource request corresponding to the VIP priority may further have a privilege of preempting a resource, and preempt a virtual resource that has been reserved for or allocated to another virtual resource request unit, or preempt a virtual resource that has been allocated to a virtual resource use unit but has not been used. The VIP priority is an optional attribute. The management entity may configure the VIP priority for a special virtual resource request message, and send a configuration result to the target virtual resource request unit as the preset rule.

In this embodiment of the present invention, the preset rule sent by the management entity to the target virtual resource request unit may include determining the priority information of the virtual resource request message according to the priority of each of the at least one virtual resource use unit represented by the identification information. Specifically, the target virtual resource request unit receives at least one virtual resource request message, each virtual resource request message includes identification information, and the identification information represents at least one virtual resource use unit. The target virtual resource request unit may determine a priority of the virtual resource request message according to a priority of one or more units represented by the identification information.

Optionally, in an embodiment, for example, the target virtual resource request unit may be a VNFM unit, identification information in a virtual resource request message received by the target virtual resource request unit may represent an NS unit user, an NS unit, and a VNF unit. One of the units may be selected according to the preset rule to start comparison. For example, priorities of NS unit users may be first compared, and a priority of the virtual resource request message is determined according to the priorities of the NS unit users. For example, a unit represented by identification information in a first virtual resource request message received by the target virtual resource request unit includes a first NS unit user, a unit represented by identification information in a second virtual resource request message includes a second NS unit user, and a priority of the first NS unit user is higher than a priority of the second NS unit user according to the preset rule. Then, the virtual resource request unit may determine that a priority of the first virtual resource request message is higher than a priority of the second virtual resource request message.

Optionally, when units represented by identification information in at least two virtual resource request messages in a plurality of virtual resource request messages received by the target virtual resource request unit include identification information of a same NS unit user, priorities of NS units are further compared, and priorities of the at least two virtual resource request messages are determined according to the priorities of the NS units. For example, a unit represented by identification information in a first virtual resource request message received by the target virtual resource request unit includes a first NS unit user and a first NS unit, a unit represented by identification information in a second virtual resource request message includes the first NS unit user and a second NS unit, and a priority of the first NS unit is higher than a priority of the second NS unit according to a preset rule. Then, the target virtual resource request unit may determine that a priority of the first virtual resource request message is higher than a priority of the second virtual resource request message.

Optionally, when identification information in at least two virtual resource request messages in a plurality of virtual resource request messages received by the target virtual resource request unit represents a same NS unit, priorities of VNF units are further compared, and priorities of the at least two virtual resource request messages having identification information of the same NS unit are determined according to the priorities of the VNF units. For example, a unit represented by identification information in a first virtual resource request message received by the target virtual resource request unit includes a first NS unit user, a first NS unit, and a first VNF unit, a unit represented by identification information in a second virtual resource request message includes the first NS unit user, the first NS unit, and a second VNF unit, and a priority of the first VNF unit is higher than a priority of the second VNF unit according to the preset rule. Then, the virtual resource request unit may determine that a priority of the first resource request message is higher than a priority of the second resource request message.

Optionally, in this embodiment of the present invention, a priority comparison sequence may be determined according to the preset rule. For example, a specific unit that is first selected for priority comparison from an NS unit user, an NS unit, and a VNF unit represented by identification information in a resource request message received by the virtual resource request unit may be stipulated in the preset rule. However, the present invention is not limited thereto.

Optionally, in an embodiment, in this embodiment of the present invention, the preset rule may further include a priority of identification information. That is, the priority of the virtual resource request message is determined according to priorities of permutations and combinations of the units represented by the identification information. Specifically, for example, an NFV architecture separately includes an NS unit user 1, an NS unit user 2, an NS unit 1, an NS unit 2, a VNFM unit 1, a VNFM unit 2, and an NFVO unit 1. When the virtual resource request unit receives different virtual resource request messages, each virtual resource request message includes identification information, and it is assumed that each piece of identification information may represent an NS unit user, an NS unit, and a VNFM unit. In the preset rule in the target virtual resource request unit, priorities of various combination forms of the NS unit users, the NS units, and the VNFM units may be stipulated. For example, a combination form of units represented by identification information included in a virtual resource request message 1 is {NFV Service User 1, NS 2, VNFM 1}, and a combination form of units represented by identification information included in a resource request message 2 is {NFV Service User 1, NS 2, VNFM 2}. Similarly, there are eight virtual resource request messages corresponding to eight combinations, and the preset rule may indicate a priority sequence of the eight combinations. When the target virtual resource request unit receives at least two virtual resource request messages, a combination form of units represented by identification information included in the virtual resource request message is one of the eight combinations. When it is assumed that the virtual resource request unit is the VNFM unit 1, a priority of each virtual resource request message may be determined according to the preset rule, and the priorities of the at least two virtual resource request messages may be determined according to the priority sequence stipulated in the preset rule. For example, if a priority of the combination form {NFV Service User 1, NS 2, VNFM 1} is higher than a priority of a combination form {NFV Service User 2, NS 2, VNFM 1} according to the preset rule, a priority of a virtual resource request message including the identification information of the combination form {NFV Service User 1, NS 2, VNFM 1} is higher than a priority of a virtual resource request message including the identification information of the combination form {NFV Service User 2, NS 2, VNFM 2}.

Optionally, in an embodiment, the preset rule sent by the management entity may further include the following: A priority of a virtual resource request message having particular identification information is a VIP priority, that is, the virtual resource request message is preferentially processed by the VIM, and can preempt a resource of another resource request message. For example, the preset rule may stipulate that when a combination form of units represented by identification information included in a virtual resource request message is {NFV Service User 1, NS 2, VNFM 2}, the virtual resource request message has a VIP priority. After receiving the virtual resource request message, the target virtual resource request unit, that is, the VNFM2, can determine that the virtual resource request message has a VIP priority.

In S230, the target virtual resource request unit sends the target virtual resource request message to the VIM. The target virtual resource request message is determined by the target virtual resource request unit according to the virtual resource request message and the priority of the virtual resource request message, and the target virtual resource request message is used by the VIM to allocate a resource according to the priority of the virtual resource request message. Specifically, after determining a priority of each received resource request message, the virtual resource request unit may determine the target resource request message according to the priority and the resource request information, and sends the target resource request message to the VIM. In this way, the VIM may obtain each piece of virtual resource request information and the priority of the virtual resource request information, and process, according to the priority of each virtual resource request message, a resource requested by the target virtual resource request information.

Optionally, in an embodiment, for example, the target virtual resource request unit sends, to the VIM, first target virtual resource request information corresponding to a first virtual resource request message and second target virtual resource request information corresponding to a second virtual resource request message, a priority of the first target virtual resource request message and a priority of the second target virtual resource request information both are general priorities, and a priority of the first virtual resource request information is higher than a priority of the second virtual resource request message. Then, the VIM may preferentially process the first virtual resource request message according to the priorities of the two received resource request messages.

Optionally, in an embodiment, for another example, the target virtual resource request unit sends, to the VIM, first target virtual resource request information corresponding to a first virtual resource request message and second target virtual resource request information corresponding to a second virtual resource request message, a priority of the first virtual resource request message is a VIP priority, and a priority of the second virtual resource request information is a general priority. Then, the VIM may preferentially process the first virtual resource request message according to the priorities of the two received virtual resource request messages, and may suspend processing of another piece of virtual resource request information. The first virtual resource request message may further preempt a resource requested by another piece of virtual resource request information. If the VIM further simultaneously receives other resource request messages sent by other virtual resource request units, and the other pieces of resource request information each has a general priority, the VIM still needs to preferentially process the first virtual resource request message having the VIP priority.

Optionally, in an embodiment, for another example, a first target virtual resource request unit sends, to the VIM, first target virtual resource request information corresponding to a first virtual resource request message, a second target virtual resource request unit sends, to the VIM, second target virtual resource request information corresponding to a second virtual resource request message, and priorities of the first virtual resource request message and the second virtual resource request information both are general priorities, but a priority of the first virtual resource request information indicates that the first virtual resource request message has a high priority in the general priorities. Then, the VIM may preferentially process the first virtual resource request message according to the priority information. Alternatively, when the first virtual resource request message and the second virtual resource request message include no related indication, the VIM may determine a processing sequence according to another condition. The present invention is not limited thereto.

Therefore, according to the method for allocating a virtual resource in an NFV network in this embodiment of the present invention, the target virtual resource request unit determines priority information of each virtual resource request message according to the identification information carried in each of a plurality of received virtual resource request messages and the preset rule, and sends a resource request message including the priority information to the VIM, so that the VIM allocates resources according to the priorities of the virtual resource request messages. Therefore, when resource requests are processed concurrently, resource utilization efficiency and flexibility can be improved. In addition, priorities of different resource request messages are considered, so that a resource contention phenomenon can be avoided, system stability and reliability can be improved, and faster and more efficient responses can be made to some emergencies.

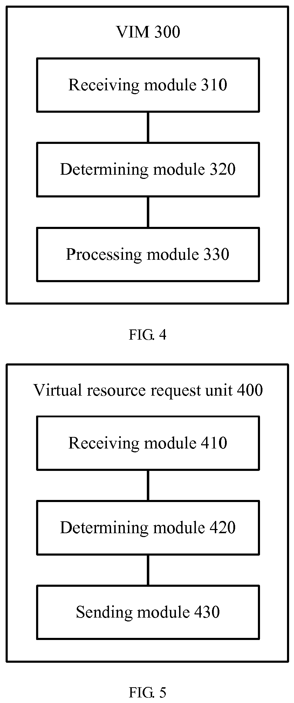

With reference to FIG. 1 to FIG. 3, the foregoing describes in detail the method for allocating a virtual resource in an NFV network in the embodiments of the present invention, and with reference to FIG. 4 to FIG. 7, the following describes an apparatus for allocating a virtual resource in an NFV network in the embodiments of the present invention.

As shown in FIG. 4, a VIM 300 for allocating a virtual resource in an NFV network according to an embodiment of the present invention includes:
a receiving module 310, configured to receive a plurality of virtual resource request messages, where each of the plurality of virtual resource request messages includes identification information, the identification information represents at least one virtual resource use unit, and each virtual resource request message is used to request a virtual resource for the at least one virtual resource use unit represented by the identification information;
a determining module 320, configured to determine a priority of each virtual resource request message according to a preset rule and the identification information; and
a processing module 330, configured to allocate a resource according to the priority of each virtual resource request message.

Therefore, the VIM for allocating a resource in an NFV network in this embodiment of the present invention determines priority information of each virtual resource request message according to the identification information carried in each of the plurality of received virtual resource request messages and the preset rule, and sequentially allocates resources for the virtual resource request messages according to the priorities. Therefore, when resource requests are processed concurrently, resource utilization efficiency and flexibility can be improved. In addition, priorities of different resource request messages are considered, so that a resource contention phenomenon can be avoided, system stability and reliability can be improved, and faster and more efficient responses can be made to some emergencies.

Optionally, the identification information represents a permutation and combination of the at least one virtual resource use unit.

Optionally, the preset rule is a correspondence between the permutation and combination of the at least one virtual resource use unit and a priority, and the determining module 320 is specifically configured to determine the priority of each virtual resource request message according to the priority of the permutation and combination of the at least one virtual resource use unit.

Optionally, the preset rule is priority information of each of the at least one virtual resource use unit, and the determining module 320 is specifically configured to determine the priority of each virtual resource request message according to the priority information of the at least one virtual resource use unit.

Optionally, the receiving module 310 is further configured to receive the preset rule sent by a network functions virtualization orchestrator NFVO unit or a virtualized network function manager VNFM unit.

Optionally, the processing module 330 is specifically configured to allocate a virtual resource for a virtual resource request message having a high priority.

Optionally, the at least one virtual resource use unit includes at least one of a network service NS unit, a virtualized network function VNF unit, an NS unit user, an NFVO unit, or a VNFM unit.

It should be understood that the VIM 300 for allocating a virtual resource in an NFV network in this embodiment of the present invention may correspondingly perform the method 100 in the embodiments of the present invention, and the foregoing and other operations and/or functions of the modules in the VIM 300 are separately intended to implement a corresponding procedure of the method in FIG. 2. For brevity, details are not described herein again.

Therefore, the VIM for allocating a resource in an NFV network in this embodiment of the present invention determines priority information of each virtual resource request message according to the identification information carried in each of the plurality of received virtual resource request messages and the preset rule, and sequentially allocates resources for the virtual resource request messages according to the priorities. Therefore, when resource requests are processed concurrently, resource utilization efficiency and flexibility can be improved. In addition, priorities of different resource request messages are considered, so that a resource contention phenomenon can be avoided, system stability and reliability can be improved, and faster and more efficient responses can be made to some emergencies.

FIG. 5 is a schematic block diagram of a virtual resource request unit 400 for allocating a virtual resource in an NFV network according to an embodiment of the present invention. The virtual resource request unit 400 may be an NFVO unit or a VNFM unit. The virtual resource request unit 400 includes:
a receiving module 410, configured to receive a virtual resource request message, where the virtual resource request message includes identification information, the identification information represents at least one virtual resource use unit, and the virtual resource request message is used to request a virtual resource for the at least one virtual resource use unit represented by the identification information;
a determining module 420, configured to determine a priority of the virtual resource request message according to a preset rule and the identification information; and
a sending module 430, configured to send a target virtual resource request message to a virtualized infrastructure manager VIM, where the target virtual resource request message is determined by the determining module 420 according to the virtual resource request message and the priority of the virtual resource request message, and the target virtual resource request message is used by the VIM to allocate a resource according to the priority of the virtual resource request message.

Therefore, the virtual resource request unit for allocating a virtual resource in an NFV network in this embodiment of the present invention determines priority information of each virtual resource request message according to identification information carried in a plurality of received virtual resource request messages and the preset rule, and sends a resource request message including the priority information to the VIM, so that the VIM sequentially allocates resources for the virtual resource request messages according to the priorities of the virtual resource request messages. Therefore, when resource requests are processed concurrently, resource utilization efficiency and flexibility can be improved. In addition, priorities of different resource request messages are considered, so that a resource contention phenomenon can be avoided, system stability and reliability can be improved, and faster and more efficient responses can be made to some emergencies.

Optionally, the identification information represents a permutation and combination of the at least one virtual resource use unit.

Optionally, the preset rule is a correspondence between the permutation and combination of the at least one virtual resource use unit and a priority, and the determining module 420 is specifically configured to determine the priority of each virtual resource request message according to the priority of the permutation and combination of the at least one virtual resource use unit.

Optionally, the preset rule is priority information of each of the at least one virtual resource use unit, and the determining module 420 is specifically configured to determine the priority of each virtual resource request message according to the priority information of the at least one virtual resource use unit.

Optionally, the receiving module 410 is further configured to receive the preset rule sent by a network functions virtualization orchestrator NFVO unit or a virtualized network function manager VNFM unit.

Optionally, the virtual resource request unit includes an NFVO unit or a VNFM unit.

Optionally, the at least one virtual resource use unit includes at least one of a network service NS unit, a virtualized network function VNF unit, an NS unit user, an NFVO unit, or a VNFM unit.

It should be understood that the virtual resource request unit 400 for allocating a virtual resource in an NFV network in this embodiment of the present invention may correspondingly perform the method 200 in the embodiments of the present invention, and the foregoing and other operations and/or functions of the modules in the virtual resource request unit 400 are separately intended to implement a corresponding procedure of the method in FIG. 3. For brevity, details are not described herein again.

Therefore, the virtual resource request unit for allocating a virtual resource in an NFV network in this embodiment of the present invention determines priority information of each virtual resource request message according to identification information carried in a plurality of received virtual resource request messages and the preset rule, and sends a resource request message including the priority information to the VIM, so that the VIM allocates resources according to the priorities of the virtual resource request messages. Therefore, when resource requests are processed concurrently, resource utilization efficiency and flexibility can be improved. In addition, priorities of different resource request messages are considered, so that a resource contention phenomenon can be avoided, system stability and reliability can be improved, and faster and more efficient responses can be made to some emergencies.

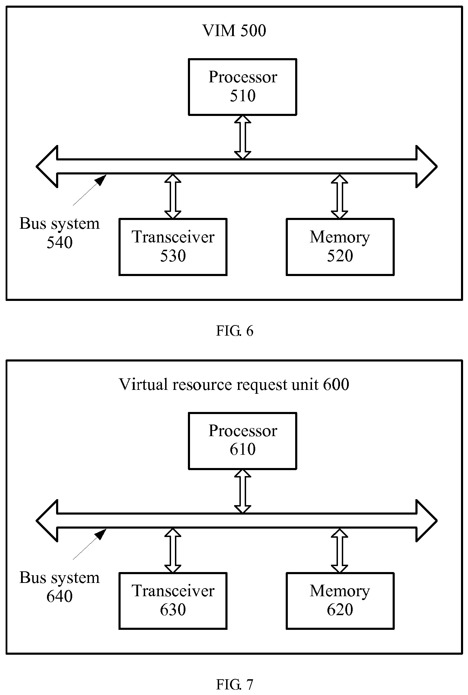

As shown in FIG. 6, an embodiment of the present invention further provides a VIM 500 for allocating a virtual resource in an NFV network. The VIM 500 includes a processor 510, a memory 520, a transceiver 530, and a bus system 540. The processor 510, the memory 520, and the transceiver 530 are connected by using the bus system 540. The memory 520 is configured to store an instruction, and the processor 510 is configured to execute the instruction stored in the memory 520, to control the transceiver 530 to receive and transmit a signal. The transceiver 530 is configured to receive a plurality of virtual resource request messages, where each of the plurality of virtual resource request messages includes identification information, the identification information represents at least one virtual resource use unit, and each virtual resource request message is used to request a virtual resource for the at least one virtual resource use unit represented by the identification information. The processor 510 then determines a priority of each virtual resource request message according to a preset rule and the identification information, and allocates a resource according to the priority of each virtual resource request message.

Therefore, the VIM for allocating a resource in an NFV network in this embodiment of the present invention determines priority information of each virtual resource request message according to the identification information carried in each of the plurality of received virtual resource request messages and the preset rule, and sequentially allocates resources for the virtual resource request messages according to the priorities. Therefore, when resource requests are processed concurrently, resource utilization efficiency and flexibility can be improved. In addition, priorities of different resource request messages are considered, so that a resource contention phenomenon can be avoided, system stability and reliability can be improved, and faster and more efficient responses can be made to some emergencies.

It should be understood that in this embodiment of the present invention, the processor 510 may be a central processing unit (Central Processing Unit, "CPU" for short), or the processor 510 may be another general purpose processor, a digital signal processor (DSP), an application-specific integrated circuit (ASIC), a field programmable gate array (FPGA) or another programmable logic device, a discrete gate or a transistor logic device, a discrete hardware component, or the like. The general purpose processor may be a microprocessor or the processor may be any conventional processor or the like.

The memory 520 may include a read-only memory and a random access memory, and provide an instruction and data for the processor 510. A part of the memory 520 may further include a non-volatile random access memory. For example, the memory 520 may further store information about a device type.

In addition to a data bus, the bus system 540 may further include a power bus, a control bus, a status signal bus, and the like. However, for clear description, all buses are marked as the bus system 540 in the figure.

In an implementation process, steps in the foregoing method may be completed by using an integrated logic circuit of hardware in the processor 510 or an instruction in a form of software. The steps of the method disclosed with reference to the embodiments of the present invention may be directly performed and completed by a hardware processor, or may be performed and completed by using a combination of the hardware in the processor and a software module. The software module may be located in a mature storage medium in the art, such as a random access memory, a flash memory, a read-only memory, a programmable read-only memory or an electrically erasable programmable memory, or a register. The storage medium is located in the memory 520, and the processor 510 reads information from the memory 520 and completes the steps in the foregoing method in combination with the hardware of the processor. To avoid repetition, details are not described herein again.

Optionally, in an embodiment, the identification information represents a permutation and combination of the at least one virtual resource use unit.

Optionally, in an embodiment, the preset rule is a correspondence between the permutation and combination of the at least one virtual resource use unit and a priority, and the processor 510 is further configured to determine the priority of each virtual resource request message according to the priority of the permutation and combination of the at least one virtual resource use unit.

Optionally, in an embodiment, the preset rule is priority information of each of the at least one virtual resource use unit, and the processor 510 is further configured to determine the priority of each virtual resource request message according to the priority information of the at least one virtual resource use unit.

Optionally, in an embodiment, the transceiver 530 is further configured to receive the preset rule sent by a network functions virtualization orchestrator NFVO unit or a virtualized network function manager VNFM unit.

Optionally, in an embodiment, the processor 510 is further configured to allocate a virtual resource for a virtual resource request message having a high priority.

Optionally, in an embodiment, the at least one virtual resource use unit includes at least one of a network service NS unit, a virtualized network function VNF unit, an NS unit user, an NFVO unit, or a VNFM unit.

It should be understood that the VIM 500 for allocating a virtual resource in an NFV network in this embodiment of the present invention may correspond to the VIM 300 in the embodiments of the present invention, and may correspond to a corresponding entity that performs the method 100 in the embodiments of the present invention. In addition, the foregoing and other operations and/or functions of the modules in the VIM 500 are separately intended to implement a corresponding procedure of the method in FIG. 2. For brevity, details are not described herein again.

Therefore, the VIM for allocating a resource in an NFV network in this embodiment of the present invention determines priority information of each virtual resource request message according to the identification information carried in each of the plurality of received virtual resource request messages and the preset rule, and sequentially allocates resources for the virtual resource request messages according to the priorities. Therefore, when resource requests are processed concurrently, resource utilization efficiency and flexibility can be improved. In addition, priorities of different resource request messages are considered, so that a resource contention phenomenon can be avoided, system stability and reliability can be improved, and faster and more efficient responses can be made to some emergencies.

As shown in FIG. 7, an embodiment of the present invention further provides a virtual resource request unit 600 for allocating a virtual resource in an NFV network. The virtual resource request unit 600 includes a processor 610, a memory 620, a transceiver 630, and a bus system 640. The processor 610, the memory 620, and the transceiver 630 are connected by using the bus system 640. The memory 620 is configured to store an instruction, and the processor 610 is configured to execute the instruction stored in the memory 620, to control the transceiver 630 to receive and transmit a signal. The transceiver 630 is configured to receive a virtual resource request message, where the virtual resource request message includes identification information, the identification information represents at least one virtual resource use unit, and the virtual resource request message is used to request a virtual resource for the at least one virtual resource use unit represented by the identification information. The processor 610 is configured to determine a priority of the virtual resource request message according to a preset rule and the identification information. The transceiver 630 is further configured to send a target virtual resource request message to a virtualized infrastructure manager VIM, where the target virtual resource request message is determined by the processor 610 according to the virtual resource request message and the priority of the virtual resource request message, and the virtual resource request message is used by the VIM to allocate a resource according to the priority of the virtual resource request message.

Therefore, the virtual resource request unit for allocating a virtual resource in an NFV network in this embodiment of the present invention determines priority information of each virtual resource request message according to identification information carried in a plurality of received virtual resource request messages and the preset rule, and sends a resource request message including the priority information to the VIM, so that the VIM allocates resources according to the priorities of the virtual resource request messages. Therefore, when resource requests are processed concurrently, resource utilization efficiency and flexibility can be improved. In addition, priorities of different resource request messages are considered, so that a resource contention phenomenon can be avoided, system stability and reliability can be improved, and faster and more efficient responses can be made to some emergencies.

It should be understood that in this embodiment of the present invention, the processor 610 may be a central processing unit (Central Processing Unit, "CPU" for short), or the processor 610 may be another general purpose processor, a digital signal processor (DSP), an application-specific integrated circuit (ASIC), a field programmable gate array (FPGA) or another programmable logic device, a discrete gate or a transistor logic device, a discrete hardware component, or the like. The general purpose processor may be a microprocessor or the processor may be any conventional processor or the like.

The memory 620 may include a read-only memory and a random access memory, and provide an instruction and data for the processor 610. A part of the memory 620 may further include a non-volatile random access memory. For example, the memory 620 may further store information about a device type.

In addition to a data bus, the bus system 640 may further include a power bus, a control bus, a status signal bus, and the like. However, for clear description, all buses are marked as the bus system 640 in the figure.

In an implementation process, steps in the foregoing method may be completed by using an integrated logic circuit of hardware in the processor 610 or an instruction in a form of software. The steps of the method disclosed with reference to the embodiments of the present invention may be directly performed and completed by a hardware processor, or may be performed and completed by using a combination of the hardware in the processor and a software module. The software module may be located in a mature storage medium in the art, such as a random access memory, a flash memory, a read-only memory, a programmable read-only memory or an electrically erasable programmable memory, or a register. The storage medium is located in the memory 620, and the processor 610 reads information from the memory 620 and completes the steps in the foregoing method in combination with the hardware of the processor. To avoid repetition, details are not described herein again.

Optionally, in an embodiment, the virtual resource request unit belongs to the N virtual resource request units.

Optionally, in an embodiment, the identification information represents a permutation and combination of the at least one virtual resource use unit.

Optionally, in an embodiment, the preset rule is a correspondence between the permutation and combination of the at least one virtual resource use unit and a priority, and the processor 610 is further configured to determine the priority of each virtual resource request message according to the priority of the permutation and combination of the at least one virtual resource use unit.

Optionally, in an embodiment, the preset rule is priority information of each of the at least one virtual resource use unit, and the processor 610 is further configured to determine the priority of each virtual resource request message according to the priority information of the at least one virtual resource use unit.

Optionally, in an embodiment, the transceiver 630 is further configured to receive the preset rule sent by a network functions virtualization orchestrator NFVO unit or a virtualized network function manager VNFM unit.

Optionally, in an embodiment, the virtual resource request unit includes an NFVO unit or a VNFM unit.

Optionally, in an embodiment, the at least one virtual resource use unit includes at least one of a network service NS unit, a virtualized network function VNF unit, an NS unit user, an NFVO unit, or a VNFM unit.

It should be understood that the virtual resource request unit 600 for allocating a resource in an NFV network in this embodiment of the present invention may correspond to the virtual resource request unit 400 in the embodiments of the present invention, and may correspond to a corresponding entity that performs the method 200 in the embodiments of the present invention. In addition, the foregoing and other operations and/or functions of the modules in the virtual resource request unit 600 are separately intended to implement a corresponding procedure of the method in FIG. 3. For brevity, details are not described herein again.

Therefore, the virtual resource request unit for allocating a virtual resource in an NFV network in this embodiment of the present invention determines priority information of each virtual resource request message according to identification information carried in the plurality of received virtual resource request messages and the preset rule, and sends a resource request message including the priority information to the VIM, so that the VIM allocates virtual resources according to the priorities of the virtual resource request messages. Therefore, when resource requests are processed concurrently, resource utilization efficiency and flexibility can be improved. In addition, priorities of different resource request messages are considered, so that a resource contention phenomenon can be avoided, system stability and reliability can be improved, and faster and more efficient responses can be made to some emergencies.

A person of ordinary skill in the art may be aware that, in combination with the examples described in the embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, function units in the embodiments of the present invention may be integrated into one processing unit, or each of the units may exist alone physically, or two or more units are integrated into one unit.

When the functions are implemented in a form of a software function unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for allocating a virtual resource in a network functions virtualization, NFV, network performed by a virtualized infrastructure manager, VIM, the method comprising:
• receiving a plurality of virtual resource request messages (S110),
∘ wherein each of the plurality of virtual resource request messages comprises identification information, the identification information of the virtual resource request messages comprises three different kinds of virtual resource units, wherein each virtual resource request message is used to request a virtual resource for the at least three virtual resource use units contained in the identification information,
∘ wherein, for each identification information, the three virtual resource use units are of different kinds, and
∘ wherein each identification information contains the same different kinds of virtual resource use units, and
∘ wherein an identification information differs from another identification information by another permutation in the sequence of the three different kinds of virtual resource units in the identification information, and wherein the kind of virtual resource use unit is: a network service, NS, unit, a virtualized network function, VNF, unit, an NS unit user, an network functions virtualization orchestrator, NFVO, unit, or a virtualized network function manager, VNFM, unit;
• determining a priority of each virtual resource request message according to a preset rule and the identification information of the virtual resource request message (S 120), wherein the preset rule is a correspondence between a sequence of priorities and a sequence of permutations of the three different kinds of virtual resources, represented by the identification information wherein the three virtual resource use units of each combination are among those, which are contained in the plurality of virtual resource request messages, wherein
∘ the determining a priority of each virtual resource request message according to a preset rule and the identification information of the virtual resource request message comprises:
determining the priority of each virtual resource request message according to the correspondence among the plurality of correspondences whose combination of virtual resource use units is the one contained in the identification information; and
• allocating, for each virtual resource request message, a resource according to the priority of the virtual resource request message (S 130).

2. A virtualized infrastructure manager, VIM, for allocating a virtual resource in a network functions virtualization, NFV, network, wherein the VIM is configured to perform the method according to claim 1.

3. A computer program product comprising instructions which, when executed by a computer, cause the computer to carry out the method of claim 1.

## Patentansprüche

1. Verfahren zum Zuweisen einer virtuellen Ressource in einem Netzwerk zur Virtualisierung von Netzwerkfunktionen (network functions virtualization - NFV), das von einem virtualisierten Infrastrukturmanager (virtualized infrastructure manager - VIM) ausgeführt wird, wobei das Verfahren Folgendes umfasst:
• Empfangen mehrerer Anforderungsnachrichten für virtuelle Ressourcen (S 110),
∘ wobei jede der mehreren Anforderungsnachrichten für virtuelle Ressourcen Identifikationsinformationen umfasst, wobei die Identifikationsinformationen der Anforderungsnachrichten für virtuelle Ressourcen drei verschiedene Arten von Einheiten für virtuelle Ressourcen umfassen, wobei jede Anforderungsnachricht für virtuelle Ressourcen verwendet wird, um eine virtuelle Ressource für die mindestens drei Nutzungseinheiten für virtuelle Ressourcen anzufordern, die in den Identifikationsinformationen enthalten sind,
∘ wobei für jede Identifikationsinformation die drei Nutzungseinheiten für virtuelle Ressourcen von verschiedenen Arten sind, und
∘ wobei jede Identifikationsinformation die gleichen verschiedenen Arten von Nutzungseinheiten für virtuelle Ressourcen enthält, und
∘ wobei sich eine Identifikationsinformation von einer anderen Identifikationsinformation durch eine andere Permutation in der Folge der drei verschiedenen Arten von virtuellen Ressourceneinheiten in der Identifikationsinformation unterscheidet, und wobei die Art der Nutzungseinheit für virtuelle Ressourcen Folgendes ist: eine Netzwerkdienst(network service - NS)-Einheit, eine virtualisierte Netzwerkfunktions(virtualized network function - VNF)-Einheit, ein Benutzer einer NS-Einheit, eine Netzwerkfunktionsvirtualisierungs-Orchestrator(network functions virtualization orchestrator - NFVO)-Einheit, oder eine virtualisierte Netzwerkfunktionsmanager(virtualized network function manager - VNFM)-Einheit;
• Bestimmen einer Priorität von jeder Anforderungsnachricht für virtuelle Ressourcen gemäß einer voreingestellten Regel und der Identifikationsinformation der Anforderungsnachricht für virtuelle Ressourcen (S 120), wobei die voreingestellte Regel eine Entsprechung zwischen einer Folge von Prioritäten und einer Folge von Permutationen der drei verschiedenen Arten von virtuellen Ressourcen ist, dargestellt durch die Identifikationsinformation,
wobei die drei Nutzungseinheiten für virtuelle Ressourcen von jeder Kombination zu denen gehören, die in den mehreren Anforderungsnachrichten für virtuelle Ressourcen enthalten sind, wobei
∘ das Bestimmen einer Priorität von jeder Anforderungsnachricht für virtuelle Ressourcen gemäß einer voreingestellten Regel und der Identifikationsinformation der Anforderungsnachricht für virtuelle Ressourcen Folgendes umfasst:
Bestimmen der Priorität von jeder Anforderungsnachricht für virtuelle Ressourcen gemäß der Entsprechung zwischen den mehreren Entsprechungen, deren Kombination von Nutzungseinheiten für virtuelle Ressourcen die ist, die in der Identifikationsinformation enthalten ist; und
• Zuweisen, für jede Anforderungsnachricht für virtuelle Ressourcen, einer Ressource gemäß der Priorität der Anforderungsnachricht für virtuelle Ressourcen (S 130).

2. Virtualisierter Infrastrukturmanager (VIM) zum Zuweisen einer virtuellen Ressource in einem Netzwerk zur Virtualisierung von Netzwerkfunktionen (NFV), wobei der VIM konfiguriert ist, um das Verfahren nach Anspruch 1 durchzuführen.

3. Computerprogrammprodukt, das Anweisungen umfasst, die, wenn sie von einem Computer ausgeführt werden, den Computer veranlassen, das Verfahren nach Anspruch 1 zu befolgen.

## Revendications

1. Procédé d'attribution d'une ressource virtuelle dans un réseau de virtualisation de fonctions réseau, NFV, exécuté par un gestionnaire d'infrastructure virtualisé, VIM, le procédé comprenant :
• la réception d'une pluralité de messages de demande de ressources virtuelles (S 110),
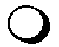 dans lequel chacun des messages de la pluralité de messages de demande de ressources virtuelles comprend des informations d'identification, les informations d'identification des messages de demande de ressources virtuelles comprenant trois types différents d'unités de ressources virtuelles et chaque message de demande de ressource virtuelle servant à demander une ressource virtuelle pour les au moins trois unités d'utilisation de ressources virtuelles contenues dans les informations d'identification,
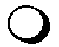 dans lequel, pour chaque information d'identification, les trois unités d'utilisation de ressources virtuelles sont de types différents et
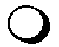 dans lequel chaque information d'identification contient les mêmes types différents d'unités d'utilisation de ressources virtuelles et
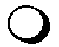 dans lequel une information d'identification diffère d'une autre information d'identification par une autre permutation dans la séquence des trois types différents d'unités de ressources virtuelles parmi les informations d'identification, et dans lequel le type d'unité d'utilisation de ressource virtuelle est : une unité de service réseau, NS, une unité de fonction de réseau virtualisée, VNF, un utilisateur d'unité de NS, une unité d'orchestrateur de virtualisation de fonctions de réseau, NFVO, ou une unité de gestionnaire de fonction de réseau virtualisée, VNFM ;
• la détermination d'une priorité de chaque message de demande de ressource virtuelle selon une règle prédéfinie et les informations d'identification du message de demande de ressource virtuelle (S 120), la règle prédéfinie étant une correspondance entre une séquence de priorités et une séquence de permutations des trois types différents de ressources virtuelles, représentées par les informations d'identification, les trois unités d'utilisation de ressources virtuelles de chaque combinaison étant parmi celles qui sont contenues dans la pluralité de messages de demande de ressources virtuelles,
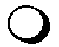 la détermination d'une priorité de chaque message de demande de ressource virtuelle selon une règle prédéfinie et les informations d'identification du message de demande de ressource virtuelle comprenant :
la détermination de la priorité de chaque message de demande de ressource virtuelle en fonction de la correspondance parmi la pluralité de correspondances dont la combinaison d'unités d'utilisation de ressources virtuelles est celle contenue dans les informations d'identification ; et
• l'attribution, pour chaque message de demande de ressource virtuelle, d'une ressource selon la priorité du message de demande de ressource virtuelle (S 130).

2. Gestionnaire d'infrastructure virtualisé, VIM, permettant d'attribuer une ressource virtuelle dans un réseau de virtualisation de fonctions de réseau, NFV, le VIM étant configuré pour exécuter le procédé selon la revendication 1.

3. Produit-programme informatique comprenant des instructions qui, lorsqu'elles sont exécutées par un ordinateur, amènent l'ordinateur à mettre en œuvre le procédé selon la revendication 1.
